# EUROPEAN PATENT SPECIFICATION

(11) **EP 2 531 579 B1**
(45) Date of publication and mention of the grant of the patent: **23.03.2016**
(21) Application number: 10788349.8
(22) Date of filing: 15.12.2010
(51) Int. Cl.: C10L 10/16, C10L 10/14, C10L 1/196

(54) **A COMPOSITION HAVING IMPROVED FILTERABILITY**
ZUSAMMENSETZUNG MIT VERBESSERTER FILTRIERBAREIT
COMPOSITION AYANT UNE FILTRABILITÉ AMÉLIORÉE

(30) Priority: 05.02.2010 US 700948
(43) Date of publication of application: 12.12.2012
(73) Proprietor: Evonik Oil Additives GmbH, 64293 Darmstadt (DE)
(72) Inventor: HESS, Brian, Willow Grove, PA 19090 (US); CYBERT, Robert, Roosevelt, NJ 08555 (US); MALITSKY, Marie A, Conshohocken, PA 19428 (US); MÄHLING, Frank-Olaf, 68165 Mannheim (DE); KOSCHABEK, Rene, 69469 Weinheim (DE); SONDJAJA, Ronny, 64283 Darmstadt (DE)
(86) International application number: PCT/EP2010/069684
(87) International publication number: WO 2011/095249

(56) References cited:
- WO-A1-99/27037
- WO-A1-2007/113035
- WO-A1-2009/077396
- WO-A2-2007/076163
- WO-A2-2010/005947
- US-A1- 2007 175 091
- INMOK LEE ET AL: "The Role of Sterol Glucosides on Filter Plugging", INTERNET CITATION, April 2007 (2007-04), pages 1-3, XP002486364, Retrieved from the Internet: URL:http://biodieselmagazine.com/article.j sp?article_id=1566&q=sterol%20g lucosides&category_id=14 [retrieved on 2008-06-30]

## Description

The present application relates to a composition having improved filterability. Furthermore the present invention describes a use of polymers for improving the filterability of fuel oils.

Fuels are nowadays mostly obtained from fossil sources. However, these resources are limited, so that replacements are being sought. Therefore, interest is rising in renewable raw materials which can be used to produce fuels. A very interesting replacement is in particular biodiesel fuel.

The term biodiesel is in many cases understood to mean a mixture of fatty acid esters, usually fatty acid methyl esters (FAMEs), with chain lengths of the fatty acid fraction of 12 to 24 carbon atoms with 0 to 3 double bonds. The higher the carbon number and the fewer double bonds are present, the higher is the melting point of the FAME. Typical raw materials are vegetable oils (i.e. glycerides) such as rapeseed oils (canola oils), sunflower oils, soya oils, palm oils, coconut oils and, in isolated cases, even used vegetable oils. Another typical source for Biodiesel is animal fat. The raw materials are converted to the corresponding FAMEs by transesterification, usually with methanol under basic catalysis.

Currently rapeseed oil methyl ester (RME) is the preferred stock for biodiesel production in Europe as rapeseed produces more oil per unit of land area compared to other oil sources. However with the high price level of RME, mixtures of RME with other feedstock, such as soybean (SME) or palm methyl ester (PME), have been exploited as well. In addition to the utilization of 100% biodiesel, mixtures of fossil diesel, i.e. the middle distillate of crude oil distillation, and biodiesel are also of interest owing to the improved low-temperature properties and better combustion characteristics.

The use of biodiesel in cold climates may require special considerations due to the tendency of precipitates to form in the biodiesel at temperatures of 0°C and below. These precipitates impair the flow characteristics of biodiesel. Based on failures of truck engines during a bitter 2005 cold spell in Minnesota, a new requirement in terms of an ASTM specification has been developed, the so called Cold Soak Filter Test (CSFT). At present the specifications ASTM D 6751 and ASTM D 7501 are in use, respectively.

Another temperature independent phenomenon of precipitation is sometimes observed in biodiesel after storage.

There are some hints that steryl glucosides (SG) could be the source for these precipitates. Indeed methods have been developed to reduce the levels of these impurities by way of some sophisticated filtration methods as disclosed e.g. by Lee et al. in "The Role of Sterol Glucosides on Filter Plugging", Biodiesel Magazine, April 2007. Furthermore, some oxidation products may cause some problems in filter blocking. The particulate is usually highly dispersed and the samples pass the conventional filter tests. However, the cold soak filter test according to ASTM D 7501 stimulates an aggregation of these particulates. For solving the problems being related to these particulates, sophisticated purifying methods have been developed. However, the purifying treatments being used to achieve a low steryl glycoside content are very expensive and complex.

Polyalkyl (meth)acrylates, PA(M)As, as pour point improvers for mineral oils, either without M(M)A (e.g. US 3 869 396 to Shell Oil Company) or with M(M)A (e.g. US 5 312 884 to Rohm & Haas Company), or else as pour point improvers for ester-based lubricants (US 5 696 066 to Rohm & Haas Company) have been established and described for quite a long time. Use of these polymers in fuel compositions which comprise at least one biodiesel fuel is, however, not described.

In addition, the publication WO 01/40334 (RohMax Additives GmbH) describes polyalkyl (meth)acrylates which can be used in biodiesel fuels. This publication provides a particular preparation which imparts exceptional properties to these polymers. However, there is a lack therein of examples relating to biodiesel fuels.

Flow improvers based on oil-soluble polymers for mixtures of fossil diesel and biodiesel are also known (WO 94/10267, Exxon Chemical Patents Inc.). However, the examples describe only ethylene-vinyl acetate copolymers (EVAs) and copolymers which have C₁₂/C₁₄-alkyl fumarate and vinyl acetate units.

In addition, a series of optimized EVA copolymers for diesel/biodiesel mixtures have also become known (EP 1 541 662 to 664; and DE 103 57 877). For instance, EP 1 541 663 describes mixtures comprising 75% by volume of diesel fuel of mineral origin and 25% by volume of biodiesel, which comprise 150 ppm of poly(dodecyl methacrylate) and 100 to 200 ppm of ethylene-vinyl acetate copolymer (EVA).

In addition, additives for fuel mixtures which comprise mineral diesel and biodiesel are described in WO 2007/113035. In addition, the low-temperature properties achievable in diesel/biodiesel mixtures through addition of additives are not necessarily applicable to pure biodiesel fuels, since their boiling behaviour, their viscosity and hence their chemical composition, i.e. hydrocarbon chain length distribution is different.

WO 2010/005947 A2 discloses a fuel oil composition comprising a petroleum based component, a biodiesel and a particulate inhibiting composition containing a polyacrylate agglomeration retarder of a number average molecular weight Mn of from 750 to 100 000 g/mol. An acrylic-type ester-acrylonitrile copolymer additive may be present.

WO 2009/077296 discloses that the cold flow filter plugging point of a biodiesel is decreased by a Poly(2-ethylhexylacrylate-b lauryl acrylate) additive with a number average molecular weight of 12980 g/mol and a polydispersity of 1.35 or by a polyacrylate additive having a number average molecular weight of 21800 g/mol and comprising 19 monomers of n-hexadecyl acrylate and 29 monomers of dodecyl acrylate in its molecule. The polydispersity of the polymer added to the biodiesel composition is betwween 1.1 and 2.5. In said document, no mixture of at least two polymers is disclosed.

WO 2007/113035 discloses a fuel oil composition comprsing 80% by weight of diesel fuel of mineral origin, 20 % by weight of biodiesel and 0.350 % by weight of a polyalkyl(meth)acrylate having a number average molecular weight of 60 000 g/mol, a polydispersity of 2.2 and comprising (C12-C15)-alkylmethacrylate and (C16-C18)-alkyl methacrylate in a weight ratio 41/50. The polyalkyl(meth)acrylate additive improves the pour point of the biodiesel fuel composition, and also the filterability and the cloud point. In said document, no mixture of at least two polymers is disclosed, and no mention is made to oxygen-containing monomers for the preparation of the polymers.

WO 99/27037 discloses a biodiesel comprsing a polyacrylate additive made of (C8-C30)-alkyl (meth)acrylates and hydroxyl or ((poly)alkoxy)alkyl (meth)acrylates. It is described that the additive improves low temperature flow and cold filter plugging point of the biodiesel. In particular, it is described the decrease of the CFPP of a biodiesel comprising 0.2 - 1.0 % by weight of a polyacrylate made of methacrylate of n-C16- and n-C18-alcohols and, 2-hydroxyethyl methacrylate, 2-hydroxypropyl methacrylate, methacrylate of ethoxylated isotridecyl alcohol or ethyl triglycol methacrylate. In said document, no mixture of at least two polyalkyl(meth)acrylate polymers is disclosed.

The known polymers show an acceptable efficiency as cold flow improvers in fossil diesel fuel and in purified biodiesel fuel as mentioned above. However, no hints are available that some of these polymers may be used to improve the filterability of low purified biodiesel fuel oils. Indeed conventional biodiesel is thoroughly purified to a level such that no problems occur with the particulates being the reason for a low filterability.

Indeed in prior art documents no problems with filterability have been described and, hence, no biodiesel fuel with a low filterability is described having an effective amount of the polymeric additives as described above.

In view of the prior art, it is thus an object of the present invention to provide a fuel oil comprising biodiesel having a high filterability without performing a sophisticated purifying process of the biodiesel fuel. The filterability should be maintained over a long storage time and after a cold soak period.

At the same time, the fuel should more particularly have very good low-temperature properties. It was a further object of the present invention to provide a fuel which possesses a high stability to oxidation. In addition, the fuel should have a maximum cetane number. At the same time, the novel fuels should be producible simply and inexpensively.

Preferred fuel compositions should give a property profile which corresponds essentially to that of mineral diesel fuel comprise a maximum proportion of renewable raw materials.

It was a further object of the present invention to provide additives which are capable of improving the filterability of biodiesel and biodiesel blends. It was a further object of the present invention to provide fuels which, when stored below the cloud point, exhibit only minor precipitation. At the same time, this formation of precipitate should be delayed for as long as possible.

These objects and further objects which are not stated explicitly but which are immediately derivable or discernible from the connections discussed herein by way of introduction are achieved by a fuel composition having all features of claim 1. Appropriate modifications of the inventive fuel composition are protected in the dependent claims referring back to Claim 1. As to the methods for improving filterability, the Claim 14 provides a solution to the underlying problem. With regard to the use of polymers comprising ester groups as filterability improvers, Claim 16 constitutes a solution to the problem.

The present invention accordingly provides a fuel oil composition comprising a biodiesel oil, characterized in that the fuel composition comprises at least one additive for improving the filterability, wherein said additive for improving the filterability comprises at least two polyalkyl(meth)acrylate polymers, wherein one of the polyalkyl(meth)acrylate polymers comprises repeating units being derived from alkyl (meth)acrylates having 16 to 40 carbon atoms in the alkyl residue and one of the polyalkyl(meth)acrylate polymers comprises repeating units which are derived from hydroxyl-containing monomers and/or (meth)acrylates of ether alcohols.

This makes it possible, in an unforeseeable manner, to provide a fuel composition which comprises a biodiesel fuel and which includes an excellent profile of properties. For instance, the fuel oil has a high filterability without performing a sophisticated purifying process of the biodiesel fuel used. The filterability is maintained over a long storage time and after a cold soak period.

In addition thereto, the present fuel compositions especially have a surprisingly low cloud point, very good low-temperature storability and excellent flow properties at low temperatures.

At the same time, the fuel oil compositions allow a series of further advantages to be achieved. These include:
The compositions of the present invention show exceptional cold flow properties. Furthermore, these improvements are achieved by applying low or high amounts of the additives to the fuel oil. The compositions of the present invention can be prepared in a particularly easy and simple manner. It is possible to use customary industrial scale plants.

The fuel composition of the present invention comprises at least one biodiesel fuel component. Biodiesel fuel is a substance, especially an oil, which is obtained from vegetable or animal material or both, or a derivative thereof, which can in principle be used as a replacement for mineral diesel fuel.

In a preferred embodiment, the biodiesel fuel, which is frequently also referred to as "biodiesel" or "biofuel", comprises fatty acid alkyl esters of fatty acids having preferably 6 to 30 and more preferably 12 to 24 carbon atoms, and monohydric alcohols-having 1 to 4 carbon atoms. In many cases, some of the fatty acids may contain one, two or three double bonds. The monohydric alcohols include especially methanol, ethanol, propanol and butanol, preference being given to methanol.

Examples of oils which derive from animal or vegetable material and which can be used in accordance with the invention are palm oil, rapeseed oil, coriander oil, soya oil, cottonseed oil, sunflower oil, castor oil, olive oil, peanut oil, corn oil, almond oil, palm kernel oil, coconut oil, mustardseed oil, oils derived from animal tallow, especially bovine tallow, bone oil, fish oils and used cooking oils. Further examples include oils which derive from cereals, wheat, jute, sesame, rice husks, jatropha, arachis oil and linseed oil. Surprising advantages can be achieved especially,in the case of use of palm oil, soya oil, jatropha oil or animal tallow, especially beef fat, chicken fat or pork fat, as a reactant for preparing biodiesel. The fatty acid alkyl esters for use with preference can be obtained from these oils by methods known in the prior art.

According to a special embodiment, preference is given in accordance with the invention to oils with a high C16:0/C18:0-glyceride content, such as palm oils and oils derived from animal tallow, and derivatives thereof, especially the palm oil alkyl esters which are derived from monohydric alcohols. Palm oil (also: palm fat) is obtained from the flesh of the palm fruits. The fruits are sterilized and pressed. Owing to their high carotene content, fruits and oil have an orange-red colour which is removed in the refining step. These oils may contain up to 80% C18:0-glyceride.

According to another embodiment of the present invention, oils with a high C18:1, C18:2 and C18:3 -glyceride and derivatives thereof, especially alkyl esters which are derived from monohydric alcohols content are preferred. These oils include cottonseed oil, wheat germ oil, soya oil, olive oil, corn oil, sunflower oil, safflower oil, hemp oil, canola/rapeseed oil. These oils may preferably contain at least 60%, especially at least 75 % by weight and more preferably at least 90 % by weight C18:1, C18:2 and/or C18:3-glyceride.

Particularly suitable biodiesel fuels are lower alkyl esters of fatty acids. Examples here include commercial mixtures of the ethyl, propyl, butyl and especially methyl esters of fatty acids having 6 to 30, preferably 12 to 24 and more preferably 14 to 22 carbon atoms, for example of caprylic acid, capric acid, lauric acid, myristic acid, palmitic acid, margaric acid, arachic acid, behenic acid, lignoceric acid, cerotic acid, palmitoleic acid, stearic acid, oleic acid, elaidic acid, petroselic acid, ricinoleic acid, elaeostearic acid, linoleic acid, linolenic acid, eicosanoic acid, gadoleinic acid, docosanoic acid or erucasic acid.

In a particular aspect of the present invention, a biodiesel fuel which comprises preferably at least 30% by weight, more preferably at least 35% by weight and most preferably at least 40% by weight of saturated fatty acid esters which have at least 16 carbon atoms in the fatty acid part is preferably used. This includes especially the esters of palmitic acid and stearic acid. Advantages which were unforeseeable for the person skilled in the art can especially be achieved with fuels which comprise at least 6% by weight, more preferably at least 10% by weight and most preferably at least 40% by weight of palmitic acid methyl ester and/or stearic acid methyl ester.

According to another embodiment of the present invention, a biodiesel fuel which comprises preferably at least 60% by weight, more preferably at least 75% by weight and most preferably at least 90% by weight of unsaturated fatty acid esters which have at least 18 carbon atoms in the fatty acid part is preferably used. This includes especially the esters of oleic acid, linoleic and/or linolenic acid. Advantages which were unforeseeable for the person skilled in the art can especially be achieved with fuels which comprise at least 40% by weight, more preferably at least 60% by weight and most preferably at least 80% by weight of oleic acid methyl ester, linoleic methyl ester and/or linolenic acid methyl ester.

For reasons of cost, these fatty acid esters are typically used as a mixture. Biodiesel fuels usable in accordance with the invention preferably have an iodine number of at most 150, especially at most 125, more preferably at most 70 and most preferably at most 60. The iodine number is a measure known per se for the content in a fat or oil of unsaturated compounds, which can be determined to DIN 53241-1. As a result, the fuel compositions of the present invention form a particularly low level of deposits in the diesel engines. In addition, these fuel compositions exhibit particularly high cetane numbers.

In general, the fuel compositions of the present invention may comprise at least 2 % by weight, in particular at least 5 % by weight, particularly at least 10 % by weight, more particularly at least 20% by weight, especially at least 50% by weight, preferably at least 80% by weight and more preferably at least 95% by weight of biodiesel fuel.

As mentioned above, the biodiesel of the present invention may comprise impurities and, hence, a low purified biodiesel can be used. Preferably, the biodiesel may comprise at least 5 ppm, especially at least 10 ppm, particularly at least 20 ppm, preferably at least 30 ppm and more preferably at least 50 ppm steryl glycosides. Steryl glycosides are well known in the art. The steryl glycosides present in biodiesel comprise a sterol group linked to a carbohydrate at the hydroxyl moiety of the sterol. The steryl glycosides may also contain a fatty acid esterified to a hydroxyl group of the carbohydrate moiety; these compounds may be described as acylated steryl glycosides. The steryl glycosides include sterol glucosides, steryl glucosides, or sterol glycosides.

Acylated steryl glycosides are naturally occurring compounds found in plants. The acylated steryl glycosides comprise a sterol group bound to a carbohydrate having a fatty acid acylated to the primary hydroxyl group of the carbohydrate moiety of a steryl glycoside. One of the acylated steryl glycosides present in soybean extracts is the 6'-linoleoyl-beta-D-glucoside of beta sitosterol present at about 47%. In plants, other fatty acids or monobasic carboxylic acids, such as palmitic acid, oleic acid, stearic acid, linoleic acid, and linolenic acid may also be acylated to the carbohydrate moiety through an ester bond. The acylated steryl glycosides are two to ten times more abundant-in plants than the (non-acylated) steryl glycosides. Steryl glycosides, also known as sterolins, are present as monoglycosides in the oil from which biodiesel is synthesized, although a few diglycosides also exist. A common sugar in steryl glycosides is D-glucose, which is joined to the sterol via the 3-beta-hydroxy group by means of an equatorial or beta-glucoside bond. Other monosaccharides that may be found in steryl glycosides include mannose, galactose, arabinose and xylose.

For further details see, e.g. "The Role of Sterol Glucosides on Filter Plugging", Biodiesel Magazine, April 2007 as mentioned above.

The presence of steryl glycosides in biodiesel can be detected by chromatography methods, e.g. high pressure liquid chromatography (HPLC).

According to a further embodiment of the present invention, the biodiesel useful for the present invention may comprise a Ranzimat value of at least 6 hours, more preferably at least 8 hours. The Ranzimat value can be determined according to DIN EN 14112.

Without any additive for improving the filterability, the biodiesel may preferably achieves a CSFT value of 300 ml after 500 seconds, more preferably a CSFT value of at most 250 ml after 720 seconds. The CSFT value can be determined according to the ASTM D 7501 method and the data mentioned above and below consider the volume achieved after the maximum time of about 720 s and the time needed to filter the 300 ml sample, respectively. In order to determine the CSFT value, a sample of the oil is stored at a low temperature of about 4.4 °C (40°F) for about 16 hours. Then the sample is allowed to warm to room temperature (20 to 22°C) prior to vacuum filtering the sample through a single 0.7 µm glass fiber filter. The vacuum pressure should be in the range of 71.1 to 84.7 kPa. For more details see the standard ASTM D 7501 and ASTM D 6217, respectively.

The fuel composition of the present invention further comprises at least one additive for improving the filterability. The fuel composition of the present invention can preferably comprise 0.05 to 5% by weight, preferably 0.08 to 3% by weight and more preferably 0.10 to 1.0% by weight of at least one additive for improving the filterability.

In particular, the additive for improving the filterability may comprise at least one polymer comprising ester groups having a number average molecular weight Mn of from 750 to 100000 g/mol and a polydispersity Mw/Mn of from 1 to 8. More preferably, the polymer comprising ester groups comprises a weight average molecular weight Mw in the range of 1000 to 60000 g/mol. The number average molecular weight Mn and the weight average molecular weight Mw can be determined via GPC using a methyl methacrylate polymer as standard.

Polymers comprising ester groups are understood in the present context to mean polymers which are obtainable by polymerizing monomer compositions which comprise ethylenically unsaturated compounds having at least one ester group, which are referred to hereinafter as ester monomers. Accordingly, these polymers contain ester groups as part of the side chain.

According to a special aspect of the present invention, polymers based on ethyl vinyl acetate can be used as an additive for improving the filterability. Preferred polymers based on ethyl vinyl acetate are described in EP 0 739 971 B1, EP 0 721 492 B2 and EP 0 741 181 B1.

Ester monomers for the manufacture of polyalkyl (meth)acrylates (PAMAs), polyalkyl fumarates and/or polyalkyl maleates are known per se. They include especially (meth)acrylates, maleates and fumarates, which may have different alcohol parts. The expression "(meth)acrylates" includes methacrylates and acrylates, and mixtures of the two. These monomers are widely known. In this context, the alkyl part may be linear, cyclic or branched. The alkyl part may also have known substituents.

The term "repeating unit" is widely known in the technical field. The present polymers comprising ester groups can preferably be obtained by means of free-radical polymerization of monomers, the controlled radical process techniques of ATRP, RAFT and NMP, which will be explained later, being counted among the free-radical processes in the context of the invention, without any intention that this should impose a restriction. In these processes, double bonds are opened up to form covalent bonds. Accordingly, the repeat unit is obtained from the monomers used.

According to a preferred embodiment the polymer may comprise repeating units derived from ester monomers having 16 to 30 carbon atoms in the alcohol part, and repeating units derived from ester monomers having 7 to 15 carbon atoms in the alcohol part.

The polymer comprising ester groups may contain 5 to 100% by weight, especially 20 to 98% by weight and more preferably 30 to 60% by weight of repeat units derived from ester monomers having 7 to 15 carbon atoms in the alcohol part.

In a particular aspect, the polymer comprising ester groups may contain 0 to 90% by weight, preferably 5 to 80% by weight and more preferably 40 to 70% by weight of repeat units derived from ester monomers having 16 to 40, preferably 16 to 30 carbon atoms in the alcohol part.

In addition, the polymer comprising ester groups may contain 0.1 to 30% by weight, preferably 0.5 to 20% by weight, of repeat units derived from ester monomers having 1 to 6 carbon atoms in the alcohol part.

The polymer comprising ester groups comprises preferably at least 40% by weight, more preferably at least 60% by weight, especially preferably at least 80% by weight and very particularly at least 95% by weight of repeat units derived from ester monomers.

Mixtures from which the inventive polymers comprising ester groups are obtainable may contain 0 to 40% by weight, especially 0.1 to 30% by weight and more preferably 0.5 to 20% by weight of one or more ethylenically unsaturated ester compounds of the formula (I) 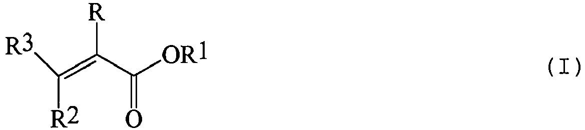 in which R is hydrogen or methyl, R¹ is a linear or branched alkyl radical having 1 to 6 carbon atoms, R² and R³ are each independently hydrogen or a group of the formula -COOR' in which R' is hydrogen or an alkyl group having 1 to 6 carbon atoms.

Examples of component (I) include (meth)acrylates, fumarates and maleates which derive from saturated alcohols, such as methyl (meth)acrylate, ethyl (meth)acrylate, n-propyl (meth)acrylate, isopropyl (meth)acrylate, n-butyl (meth)acrylate, tert-butyl (meth)acrylate and pentyl (meth)acrylate, hexyl (meth)acrylate; cycloalkyl (meth)acrylates, such as cyclopentyl (meth)acrylate, cyclohexyl (meth)acrylate.

The compositions to be polymerized preferably contain 0 to 100% by weight, particularly 5 to 98% by weight, especially 20 to 90% by weight and more preferably 30 to 60% by weight of one or more ethylenically unsaturated ester compounds of the formula (II) 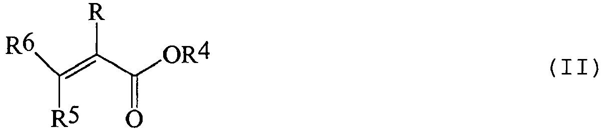 in which R is hydrogen or methyl, R⁴ is a linear or branched alkyl radical having 7 to 15 carbon atoms, R⁵ and R⁶ are each independently hydrogen or a group of the formula -COOR" in which R" is hydrogen or an alkyl group having 7 to 15 carbon atoms.

Examples of component (II) include:
(meth)acrylates, fumarates and maleates which derive from saturated alcohols, such as 2-ethylhexyl (meth)acrylate, heptyl (meth)acrylate, 2-tert-butylheptyl (meth)acrylate, octyl (meth)acrylate, 3-isopropylheptyl (meth)acrylate, nonyl (meth)acrylate, decyl (meth)acrylate, 2-Propylheptyl(meth)acrylate, undecyl (meth)acrylate, 5-methylundecyl (meth)acrylate, dodecyl (meth)acrylate, 2-methyldodecyl (meth)acrylate, tridecyl (meth)acrylate, 5-methyltridecyl (meth)acrylate, tetradecyl (meth)acrylate, pentadecyl (meth)acrylate;
(meth)acrylates which derive from unsaturated alcohols, for example oleyl (meth)acrylate;
cycloalkyl (meth) acrylates such as 3-vinylcyclohexyl (meth)acrylate, bornyl (meth)acrylate; and the corresponding fumarates and maleates.

In addition, preferred monomer compositions comprise 0 to 100% by weight, particularly 0.1 to 90% by weight, preferably 5 to 80% by weight and more preferably 40 to 70% by weight of one or more ethylenically unsaturated ester compounds of the formula (III) 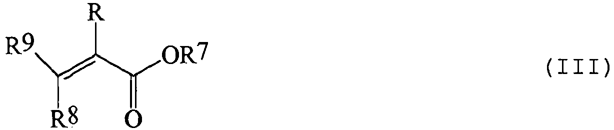 in which R is hydrogen or methyl, R⁷ is a linear or branched alkyl radical having 16 to 40 and preferably 16 to 30 carbon atoms, R⁸ and R⁹ are each independently hydrogen or a group of the formula -COOR''' in which R''' is hydrogen or an alkyl group having 16 to 40 and preferably 16 to 30 carbon atoms.
Examples of component (III) include (meth)acrylates which derive from saturated alcohols, such as hexadecyl (meth)acrylate, 2-methylhexadecyl (meth)acrylate, heptadecyl (meth)acrylate, 5-isopropylheptadecyl (meth)acrylate, 4-tert-butyloctadecyl (meth)acrylate, 5-ethyloctadecyl (meth)acrylate, 3-isopropyloctadecyl (meth)acrylate, octadecyl (meth)acrylate, nonadecyl (meth)acrylate, eicosyl (meth)acrylate, cetyleicosyl (meth)acrylate, stearyleicosyl (meth)acrylate, docosyl (meth)acrylate and/or eicosyltetratriacontyl (meth)acrylate;
cycloalkyl (meth)acrylates such as 2,4,5-tri-t-butyl-3-vinylcyclohexyl (meth)acrylate, 2,3,4,5-tetra-t-butylcyclohexyl (meth)acrylate,
and the corresponding fumarates and maleates.

The ester compounds with a long-chain alcohol part, especially components (II) and (III), can be obtained, for example, by reacting (meth)acrylates, fumarates, maleates and/or the corresponding acids with long-chain fatty alcohols, which generally gives rise to a mixture of esters, for example (meth)acrylates with different long-chain hydrocarbons in the alcohol parts. These fatty alcohols include Oxo Alcohol® 7911, Oxo Alcohol® 7900, Oxo Alcohol® 1100; Alfol® 610, Alfol® 810, Lial® 125 and Nafol® types (Sasol); Alphanol® 79 (ICI); Epal® 610 and Epal® 810 (Afton); Linevol® 79, Linevol® 911 and Neodol® 25E (Shell); Dehydad®, Hydrenol® and Lorol® types (Cognis); Acropol® 35 and Exxal® 10 (Exxon Chemicals); Kalcol® 2465 (Kao Chemicals).

Among the ethylenically unsaturated ester compounds, the (meth)acrylates are particularly preferred over the maleates and fumarates, i.e. R², R³, R⁵, R⁶, R⁸ and R⁹ of the formulae (I), (II) and (III) in particularly preferred embodiments are each hydrogen.

The weight ratio of units derived from ester monomers having 7 to 15 carbon atoms, preferably of the formula (II), to the units derived from ester monomers having 16 to 40 carbon atoms, preferably of the formula.(III), may be within a wide range. The weight ratio of repeat units derived from ester monomers having 7 to 15 carbon atoms in the alcohol part to repeat units derived from ester monomers having 16 to 40 carbon atoms in the alcohol part is preferably in the range from 5:1 to 1:30, more preferably in the range from 1:1 to 1:3, especially preferably 1:1.1 to 1:2.

Component (IV) comprises especially ethylenically unsaturated monomers which can be copolymerized with the ethylenically unsaturated ester compounds of the formulae (I), (II) and/or (III).

However, particularly suitable comonomers for polymerization according to the present invention are those which correspond to the formula: 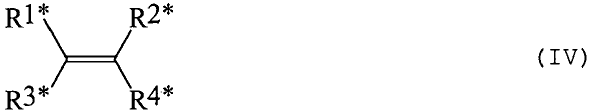
in which R¹* and R²* are each independently selected from the group consisting of hydrogen, halogens, CN, linear or branched alkyl groups having 1 to 20, preferably 1 to 6 and more preferably 1 to 4, carbon atoms which may be substituted by 1 to (2n+1) halogen atoms, where n is the number of carbon atoms of the alkyl group (for example CF₃), α,β-unsaturated linear or branched alkenyl or alkynyl groups having 2 to 10, preferably 2 to 6 and more preferably 2 to 4, carbon atoms which may be substituted by 1 to (2n-1) halogen atoms, preferably chlorine, where n is the number of carbon atoms of the alkyl group, for example CH₂=CCl-, cycloalkyl groups having 3 to 8 carbon atoms which may be substituted by 1 to (2n-1) halogen atoms, preferably chlorine, where n is the number of carbon atoms of the cycloalkyl group; C(=Y*)R⁵*, C (=Y*)NR⁶*R⁷*, Y*C(=Y*)R⁵*, SOR⁵*, SO₂R⁵*, OSO₂R⁵*, NR⁸*SO₂R⁵*, PR⁵*₂, P(=Y*)R⁵*_{2,} Y*PR⁵*₂, Y*P (=Y*) R⁵*₂, NR⁸*₂ which may be quaternized with an additional R⁸*, aryl or heterocyclyl group, where Y* may be NR⁸*, S or O, preferably O; R⁵* is an alkyl group having from 1 to 20 carbon atoms, an alkylthio having 1 to 20 carbon atoms, OR¹⁵ (R¹⁵ is hydrogen or an alkali metal), alkoxy of 1 to 20 carbon atoms, aryloxy or heterocyclyloxy; R⁶* and R⁷* are each independently hydrogen or an alkyl group having 1 to 20 carbon atoms, or R⁶* and R⁷* together may form an alkylene group having 2 to 7, preferably 2 to 5 carbon atoms, in which case they form a 3- to 8-membered, preferably 3- to 6-membered, ring, and R⁸* is hydrogen, linear or branched alkyl or aryl groups having 1 to 20 carbon atoms;
R³* and R⁴* are independently selected from the group consisting of hydrogen, halogen (preferably fluorine or chlorine), alkyl groups having 1 to 6 carbon atoms and COOR⁹* in which R⁹* is hydrogen, an alkali metal or an alkyl group having 1 to 40 carbon atoms, or R¹* and R³* together may form a group of the formula (CH₂)_{n'} which may be substituted by 1 to 2n' halogen atoms or C₁ to C₉ alkyl groups, or form the formula C(=O)-Y*-C(=O) where n' is 2 to 6, preferably 3 or 4, and Y* is as defined above; and where at least 2 of the R¹*, R²*, R³* and R⁴* radicals are hydrogen or halogen.

The preferred comonomers (IV) include hydroxyalkyl (meth)acrylates like 3-hydroxypropyl (meth)acrylate, 3,4-dihydroxybutyl (meth)acrylate, 2-hydroxyethyl (meth)acrylate, 2-hydroxypropyl (meth)acrylate, 2,5-dimethyl-1,6-hexanediol (meth)acrylate, 1,10-decanediol (meth)acrylate;
aminoalkyl (meth)acrylates and aminoalkyl (meth)acrylamides like N-(3-dimethylaminopropyl)methacrylamide, 3-diethylaminopentyl (meth)acrylate, 3-dibutylaminohexadecyl (meth)acrylate;
nitriles of (meth)acrylic acid and other nitrogen-containing (meth)acrylates like N-(methacryloyloxyethyl)diisobutylketimine, N-(methacryloyloxyethyl)dihexadecylketimine, (meth)acryloylamidoacetonitrile, 2-methacryloyloxyethylmethylcyanamide, cyanomethyl (meth)acrylate;
aryl (meth)acrylates like benzyl (meth)acrylate or phenyl (meth)acrylate, where the acryl residue in each case can be unsubstituted or substituted up to four times;
carbonyl-containing (meth)acrylates like 2-carboxyethyl (meth)acrylate, carboxymethyl (meth)acrylate, oxazolidinylethyl (meth)acrylate, N-methyacryloyloxy)formamide, acetonyl (meth)acrylate, N-methacryloylmorpholine, N-methacryloyl-2-pyrrolidinone, N-(2-methyacryloxyoxyethyl)-2-pyrrolidinone, N-(3-methacryloyloxypropyl)-2-pyrrolidinone, N-(2-methyacryloyloxypentadecyl(-2-pyrrolidinone, N-(3-methacryloyloxyheptadecyl-2-pyrrolidinone;
(meth)acrylates of ether alcohols like tetrahydrofurfuryl (meth)acrylate, methoxyethoxyethyl (meth)acrylate, 1-butoxypropyl (meth)acrylate, cyclohexyloxyethyl (meth)acrylate, propoxyethoxyethyl (meth)acrylate, benzyloxyethyl (meth)acrylate, furfuryl (meth)acrylate, 2-butoxyethyl (meth)acrylate, 2-ethoxy-2-ethoxyethyl (meth)acrylate, 2-methoxy-2-ethoxypropyl (meth)acrylate, ethoxylated (meth)acrylates, 1-ethoxybutyl (meth)acrylate, methoxyethyl (meth)acrylate, 2-ethoxy-2-ethoxy-2-ethoxyethyl (meth)acrylate, esters of (meth)acrylic acid and methoxy polyethylene glycols;
(meth)acrylates of halogenated alcohols like 2,3-dibromopropyl (meth)acrylate, 4-bromophenyl (meth)acrylate, 1,3-dichloro-2-propyl (meth)acrylate, 2-bromoethyl (meth)acrylate, 2-iodoethyl (meth)acrylate, chloromethyl (meth)acrylate;
oxiranyl (meth)acrylate like 2, 3-epoxybutyl (meth)acrylate, 3,4-epoxybutyl (meth)acrylate, 10,11 epoxyundecyl (meth)acrylate, 2,3-epoxycyclohexyl (meth)acrylate, oxiranyl (meth)acrylates such as 10,11-epoxyhexadecyl (meth)acrylate, glycidyl (meth)acrylate;
phosphorus-, boron- and/or silicon-containing (meth)acrylates like 2-(dimethylphosphato)propyl (meth)acrylate, 2-(ethylphosphito)propyl (meth)acrylate, 2-dimethylphosphinomethyl (meth)acrylate, dimethylphosphonoethyl (meth)acrylate, diethylmethacryloyl phosphonate, dipropylmethacryloyl phosphate, 2-(dibutylphosphono)ethyl (meth)acrylate, 2,3-butylenemethacryloylethyl borate, methyldiethoxymethacryloylethoxysiliane, diethylphosphatoethyl (meth)acrylate;
sulfur-containing (meth)acrylates like ethylsulfinylethyl (meth)acrylate, 4-thiocyanatobutyl (meth)acrylate,
ethylsulfonylethyl (meth)acrylate, thiocyanatomethyl (meth)acrylate, methylsulfinylmethyl (meth)acrylate, bis(methacryloyloxyethyl) sulfide;
heterocyclic (meth)acrylates like 2-(1-imidazolyl)ethyl (meth)acrylate, 2-(4-morpholinyl)ethyl (meth)acrylate and 1-(2-methacryloyloxyethyl)-2-pyrrolidone;
maleic acid and maleic acid derivatives different from those mentioned under (I), (II) and (III); for example maleic anhydride, methylmaleic anhydride, maleimide, methylmaleimide;
fumaric acid and fumaric acid derivatives different from those mentioned under (I), (II) and (III);
vinyl halides such as, for example, vinyl chloride, vinyl fluoride, vinylidene chloride and vinylidene fluoride;
vinyl esters like vinyl acetate;
vinyl monomers containing aromatic groups like styrene, substituted styrenes with an alkyl substituent in the side chain, such as α-methylstyrene and α-ethylstyrene, substituted styrenes with an alkyl substituent on the ring such as vinyltoluene and p-methylstyrene, halogenated styrenes such as monochlorostyrenes, dichlorostyrenes, tribromostyrenes and tetrabromostyrenes;
heterocyclic vinyl compounds like,2-vinylpyridine, 3-vinylpyridine, 2-methyl-5-vinylpyridine, 3-ethyl-4-vinylpyridine, 2,3-dimethyl-5-vinylpyridine,
vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, 2-vinylpyrrolidone, N-vinylpyrrolidine, 3-vinylpyrrolidine, N-vinylcaprolactam, N-vinylbutyrolactam, vinyloxolane, vinylfuran, vinylthiophene, vinylthiolane, vinylthiazoles and hydrogenated vinylthiazoles, vinyloxazoles and hydrogenated vinyloxazoles;
vinyl and isoprenyl ethers;
methacrylic acid and acrylic acid.

The proportion of comonomers (IV) can be varied depending on the use and property profile of the polymer. In general, this proportion may be in the range from 0 to 60% by weight, preferably from 0.01 to 20% by weight and more preferably from 0.1 to 10% by weight. Owing to the combustion properties and for ecological reasons, the proportion of the monomers which comprise aromatic groups, heteroaromatic groups, nitrogen-containing groups, phosphorus-containing groups and sulphur-containing groups can be minimized. The proportion of these monomers can therefore be restricted to 1% by weight, in particular 0.5% by weight and preferably 0.01% by weight.

The comonomers (IV) and the ester monomers of the formulae (I), (II) and (III) can each be used individually or as mixtures.

Surprising advantages can be achieved, inter alia, with polymers comprising ester groups which comprise repeating units which are derived from hydroxyl-containing monomers and/or (meth)acrylates of ether alcohols. The hydroxyl-containing monomers include hydroxyalkyl (meth)acrylates and vinyl alcohols. These monomers have been disclosed in detail above.

The polymers comprising ester groups for use in accordance with the invention have a number average molecular weight in the range of 750 to 100 000 g/mol, preferably in the range of 2 000 to 70 000 g/mol and more preferably in the range of 5 000 to 40 000 g/mol. Preferably, the weight average molecular weight of the polymers comprising ester groups for use in accordance with the invention is in the range of 1000 to 60000 g/mol, more preferably in the range of 5000 to 50000 g/mol.

As mentioned above, the number average molecular weight Mn and the weight average molecular weight Mw can be determined via GPC using a methyl methacrylate polymer as standard.

The preferred copolymers which can be obtained by polymerizing unsaturated ester compounds preferably have a polydispersity M_{w}/Mₙ in the range of 1 to 8, more preferably 1.05 to 6.0 and most preferably 1.2 to 5.0. This parameter can be determined by GPC as mentioned above and below.

The polyalkyl(meth)acrylate polymer comprising repeating units which are derived from hydroxyl-containing monomers and/or (meth)acrylates of ether alcohols further includes repeating units derived from ester monomers having 7 to 40 carbon atoms in the alcohol part. Preferably, the polymer having repeating units which are derived from hydroxyl-containing monomers and/or (meth)acrylates of ether alcohols comprises at least 40 % by weight, especially at least 60 % by weight and more preferably at least 80 % by weight of repeating units derived from ester monomers having 7 to 40 carbon atoms, more preferably 7 to 15 carbon atoms in the alcohol part. In particular, the polymer having repeating units which are derived from hydroxyl-containing monomers and/or (meth)acrylates of ether alcohols may comprise 0,1 to 40 % by weight, especially 1 to 20 % by weight and more preferably 4 to 12 % by weight of repeating units which are derived from hydroxyl-containing monomers and/or (meth)acrylates of ether alcohols as mentioned above. The hydroxyl-containing monomers include hydroxyalkyl (meth)acrylates and vinyl alcohols. These monomers have been disclosed in detail above.

As mentioned above, preferred additives for improving the filterability comprises at least two polyalkyl(meth)acrylate polymers wherein one of the polymers have a higher content of repeating units which are derived from hydroxyl-containing monomers and/or (meth)acrylates of ether alcohols than the other. Accordingly, preferred polyalkyl(meth)acrylate polymers comprising repeating units being derived from alkyl (meth)acrylates having 16 to 40 carbon atoms in the alkyl residue for use with preference in the inventive fuel mixtures preferably contain at most 5% by weight, preferably at most 3% by weight, more preferably at most 1% by weight and most preferably at most 0.1% by weight of units which are derived from hydroxyl-containing monomers and/or (meth)acrylates of ether alcohols.

According to a preferred aspect of the present invention, the polyalkyl(meth)acrylate polymers comprising repeating units which are derived from hydroxyl-containing monomers and/or (meth)acrylates of ether alcohols preferably have a lower molecular weight than the other polyalkyl(meth)acrylate polymer.

Particularly, the weight ratio of said polyalkyl(meth)acrylate polymers comprising a repeating units being derived from alkyl (meth)acrylates having 16 to 40 carbon atoms in the alkyl residue to said polyalkyl(meth)acrylate polymers comprising repeating units which are derived from hydroxyl-containing monomers and/or (meth)acrylates of ether alcohols have a lower molecular weight is in the range from 10:1 to 1:10, more preferably in the range from 3:1 to 1:3.

The architecture of the polymers comprising ester groups is not critical for many applications and properties. Accordingly, the polymers comprising ester groups may be random copolymers, gradient copolymers, block copolymers and/or graft copolymers.

Block copolymers and gradient copolymers can be obtained, for example, by altering the monomer composition discontinuously during the chain growth. The blocks derived from ester compounds of the formulae (I), (II) and/or (III) preferably have at least 10 and more preferably at least 30 monomer units.

The preparation of the polyalkyl esters from the above-described compositions is known per se. Thus, these polymers can be obtained in particular by free-radical polymerization and related processes, for example ATRP (= Atom Transfer Radical Polymerization) or RAFT (= Reversible Addition Fragmentation Chain Transfer).

Customary free-radical polymerization is described, inter alia, in Ullmann's Encyclopedia of Industrial Chemistry, Sixth Edition. In general, a polymerization initiator and a chain transfer agent are used for this purpose. The usable initiators include the azo initiators widely known in the technical field, such as AIBN and 1,1-azobiscyclohexane-carbonitrile, and also peroxy compounds such as methyl ethyl ketone peroxide, acetylacetone peroxide, dilauryl peroxide, tert-butyl per-2-ethylhexanoate, ketone peroxide, tert-butyl peroctoate, methyl isobutyl ketone peroxide, cyclohexanone peroxide, dibenzoyl peroxide, tert-butyl peroxybenzoate, tert-butyl peroxyisopropylcarbonate, 2,5-bis(2-ethylhexanoylperoxy)-2,5-dimethylhexane, tert-butyl peroxy-2-ethylhexanoate, tert-butyl peroxy-3,5,5-trimethylhexanoate, dicumyl peroxide, 1,1-bis(tert-butylperoxy)cyclohexane, 1,1-bis(tert-butylperoxy)-3,3,5-trimethylcyclohexane, cumyl hydroperoxide, tert-butyl hydroperoxide, bis(4-tert-butylcyclohexyl) peroxydicarbonate, mixtures of two or more of the aforementioned compounds with one another, and mixtures of the aforementioned compounds with compounds which have not been mentioned but can likewise form free radicals. Suitable chain transfer agents are in particular oil-soluble mercaptans, for example n-dodecyl mercaptan or 2-mercaptoethanol, or else chain transfer agents from the class of the terpenes, for example terpinolene.

The ATRP process is known per se. It is assumed that it is a "living" free-radical polymerization, without any intention that the description of the mechanism should impose a restriction. In these processes, a transition metal compound is reacted with a compound which has a transferable atom group. This transfers the transferable atom group to the transition metal compound, which oxidizes the metal. This reaction forms a radical which adds onto ethylenic groups. However, the transfer of the atom group to the transition metal compound is reversible, so that the atom group is transferred back to the growing polymer chain, which forms a controlled polymerization system. The structure of the polymer, the molecular weight and the molecular weight distribution can be controlled correspondingly.

This reaction is described, for example, by J-S. Wang, et al., J. Am. Chem. Soc., vol. 117, p. 5614-5615 (1995), by Matyjaszewski, Macromolecules, vol. 28, p. 7901-7910 (1995). In addition, the patent applications WO 96/30421, WO 97/47661, WO 97/18247, WO 98/40415 and WO 99/10387 disclose variants of the ATRP explained above.

In addition, the inventive polymers may be obtained, for example, also via RAFT methods. This process is presented in detail, for example, in WO 98/01478 and WO 2004/083169.

In addition, the inventive polymers are obtainable by NMP processes (nitroxide-mediated polymerization), which are described, inter alia, in US 4581429.

These methods are described comprehensively, in particular with further references, inter alia, in K. Matyjaszewski, T.P. Davis, Handbook of Radical Polymerization, Wiley Interscience, Hoboken 2002.

The polymerization may be carried out at standard pressure, reduced pressure or elevated pressure. The polymerization temperature is generally in the range of -20° - 200°C, preferably 0° - 160°C and more preferably 60° - 140°C.

The polymerization may be carried out with or without solvent. The term solvent is to be understood here in a broad sense.

The polymerization is preferably carried out in a nonpolar solvent. These include hydrocarbon solvents, for example aromatic solvents such as toluene, benzene and xylene, saturated hydrocarbons, for example cyclohexane, heptane, octane, nonane, decane, dodecane, which may also be present in branched form. These solvents may be used individually. and as a mixture. Particularly preferred solvents are mineral oils, diesel fuels of mineral origin, natural vegetable and animal oils, biodiesel fuels and synthetic oils (e.g. ester oils such as dinonyl adipate), and also mixtures thereof. Among these, very particular preference is given to mineral oils and mineral diesel fuels.

The inventive fuel composition may comprise further additives in order to achieve specific solutions to problems. These additives include dispersants, for example wax dispersants and dispersants for polar substances, demulsifiers, defoamers, lubricity additives, antioxidants, cetane number improvers, detergents, dyes, corrosion inhibitors and/or odorants.

For example, the inventive fuel composition may comprise ethylene copolymers which are described, for example, in EP-A-1 541 663. These ethylene copolymers may contain 8 to 21 mol% of one or more vinyl and/or (meth)acrylic esters and 79 to 92% by weight of ethylene. Particular preference is given to ethylene copolymers containing 10 to 18 mol% and especially 12 to 16 mol% of at least one vinyl ester. Suitable vinyl esters derive from fatty acids having linear or branched alkyl groups having 1 to 30 carbon atoms. Examples include vinyl acetate, vinyl propionate, vinyl butyrate, vinyl hexanoate, vinyl heptanoate, vinyl octanoate, vinyl laurate and vinyl stearate, and also esters of vinyl alcohol based on branched fatty acids, such as vinyl isobutyrate, vinyl pivalate, vinyl 2-ethylhexanoate, vinyl isononanoate, vinyl neononanoate, vinyl neodecanoate and vinyl neoundecanoate. Comonomers which are likewise suitable are esters of acrylic acid and methacrylic acid having 1 to 20 carbon atoms in the alkyl radical, such as methyl (meth)acrylate, ethyl (meth)acrylate, propyl (meth)acrylate, n- and isobutyl (meth)acrylate, hexyl (meth)acrylate, octyl (meth)acrylate, 2-ethylhexyl (meth)acrylate, decyl (meth)acrylate, dodecyl (meth)acrylate, tetradecyl (meth)acrylate, hexadecyl (meth)acrylate, octadecyl (meth)acrylate, and also mixtures of two, three or four or else more of these comonomers.

Particularly preferred terpolymers of vinyl 2-ethylhexanoate, of vinyl neononanoate and of vinyl neodecanoate contain, apart from ethylene, preferably 3.5 to 20 mol%, in particular 8 to 15 mol%, of vinyl acetate and 0.1 to 12 mol%, in particular 0.2 to 5 mol%, of the particular long-chain vinyl ester, the total comonomer content being between 8 and 21 mol%, preferably between 12 and 18 mol%. Further preferred copolymers contain, in addition to ethylene and 8 to 18 mol% of vinyl esters, also 0.5 to 10 mol% of olefins such as propene, butene, isobutylene, hexene, 4-methylpentene, octene, diisobutylene and/or norbornene.

The ethylene copolymers preferably have molecular weights which correspond to melt viscosities at 140°C of from 20 to 10 000 mPas, in particular 30 to 5000 mPas and especially 50 to 1000 mPas. The degrees of branching determined by means of ¹H NMR spectroscopy are preferably between 1 and 9 CH₃/100 CH₂ groups, in particular between 2 and 6 CH₃/100 CH₂ groups, for example 2.5 to 5 CH₃/100 CH₂ groups, which do not stem from the comonomers.

Such ethylene copolymers are described in detail, inter alia, in DE-A-34 43 475, EP-B-0 203 554, EP-B-0 254 284, EP-B-0 405 270,-EP-B-0 463 518, EP-B-0 493 769, EP-0 778 875, DE-A-196 20 118, DE-A-196 20 119 and EP-A-0 926 168.

Preference is given in this context to ethylene-vinyl acetate copolymers and terpolymers which, in addition to ethylene and vinyl acetate repeat units, also have repeat (meth)acrylic ester units. These polymers may be structured, for example, as random copolymers, as block copolymers or as graft copolymers.

In a preferred embodiment, the inventive fuel composition may comprise 0.0005 to 2% by weight, preferably 0.01 to 0.5% by weight, of ethylene copolymers.

For reasons of cost, however, a proportion of the above-described ethylene copolymers can be dispensed with in a further embodiment, in which case these fuel compositions without a significant proportion of ethylene copolymers have outstanding properties. In this specific embodiment, the proportion of ethylene copolymers may preferably be at most 0.05% by weight, more preferably at most 0.001% by weight and most preferably at most 0.0001% by weight.

The fuel composition of the present invention may comprise diesel fuel of mineral origin, i.e. diesel, gas oil or diesel oil. Mineral diesel fuel is widely known per se and is commercially available. This is understood to mean a mixture of different hydrocarbons which is suitable as a fuel for a diesel engine. Diesel can be obtained as a middle distillate, in particular by distillation of crude oil. The main constituents of the diesel fuel preferably include alkanes, cycloalkanes and aromatic hydrocarbons having about 10 to 22 carbon atoms per molecule.
A few longer chain n-paraffins up to 36 carbon atoms may typically be present and may significantly influence the cold flow properties of Diesel fuels.

Preferred diesel fuels of mineral origin boil in the range of 120 °C to 450°C, more preferably 170 °C and 390°C. Preference is given to using those middle distillates which contain 0.05% by weight of sulphur and less, more preferably less than 350 ppm of sulphur, in particular less than 200 ppm of sulphur and in special cases less than 50 ppm of sulphur, for example less than 10 ppm of sulphur. They are preferably those middle distillates which have been subjected to refining under hydrogenating conditions, and which therefore contain only small proportions of polyaromatic and polar compounds. They are preferably those middle distillates which have 95% distillation points below 370 °C, in particular below 350 °C and in special cases below 330°C. Synthetic fuels, as obtainable, for example, by the Fischer-Tropsch process or gas to liquid processes (GTL), are also suitable as diesel fuels of mineral origin.

The kinematic viscosity of diesel fuels of mineral origin to be used with preference is in the range of 0.5 to 8 mm²/s, more preferably 1 to 5 mm²/s, and especially preferably 1.5 to 3 mm²/s, measured at 40 °C to ASTM D 445.

For reasons of environmental protection, the proportion of diesel fuels of mineral origin may preferably be limited to at most 95% by weight, especially at most 90 % by weight, more preferably at most 80% by weight, particularly at most 60 % by weight and most preferably at most 15% by weight.

The present fuel oil composition comprises an excellent filterability according to ASTM D 7501 as described above. Preferably, the biodiesel achieves a CSFT value of 300 ml after at most 350 seconds with an effective amount of said additive for improving the filterability. In particularly the 300 ml volume can be achieved after a period of time of at most 300 seconds, more preferably after a period of time of at most 200 seconds.

The inventive fuel compositions have outstanding low-temperature properties. More particularly, the pour point (PP) to ASTM D97 preferably has values less than or equal to 18°C, preferably less than or equal to 0°C and more preferably less than or equal to -12°C. Based on the biodiesel fuel without addition of polymers for use in accordance with the invention, it is unexpectedly possible to achieve improvements in the pour point of 3°C, preferably 6°C and most preferably >6°C.

The limit of the cold filter plugging point (CFPP) measured to DIN EN 116 is preferably at most 16°C, more preferably at most 0°C and more preferably at most -12°C. In addition, the cloud point (CP) to ASTM D2500 of preferred fuel compositions may assume values less than or equal to 16°C, preferably less than or equal to 0°C and more preferably less than or equal to -12°C.

Usually fuel oil compositions comprise at least 70 % by weight, more preferably at least 90 % by weight and most preferably at least 98 % by weight fuel oil. Useful fuel oils include diesel fuel of mineral origin and biodiesel fuel oil.

The inventive fuel compositions preferably have an iodine number of at most 30, more preferably at most 20 and most preferably at most 10.

The cetane number to DIN 51773 of inventive fuel compositions is preferably at least 50, more preferably at least 53, in particular at least 55 and most preferably at least 58.

The viscosity of the present fuel compositions may be within a wide range, and this feature can be adjusted to the intended use. This adjustment can be effected, for example, by selecting the biodiesel fuels or the mineral diesel fuels. In addition, the viscosity can be varied by the amount and the molecular weight of the ester-comprising polymers used. The kinematic viscosity of preferred fuel compositions of the present invention is in the range of 1 to 10 mm²/s, more preferably 2 to 5 mm²/s and especially preferably 2.5 to 4 mm²/s, measured at 40 °C to ASTM D445.

The use a polyalkyl(meth)acrylate polymer having a number average molecular weight Mn of from 750 to 100000 g/mol and a polydispersity Mw/Mn of from 1 to 8 to improve the filterability of a fuel oil comprising a biodiesel accordingly provides fuel compositions with exceptional properties. Regarding such aspect a low purified biodiesel can be used in order to meet the requirement's of ASTM D 7501.

In addition thereto the present invention provides a method for improving the filterability of a fuel oil comprising a biodiesel wherein the additive for improving the filterability as defined in claim 1 is added to said fuel oil composition. Especially a polyalkyl(meth)acrylate polymer having a number average molecular weight Mn of from 750 to 100000 g/mol and a polydispersity Mw/Mn of from 1 to 8 can be added as an additive for improving the filterability to the fuel oil compositions.

The invention will be illustrated in detail hereinafter with reference to examples and comparative examples, without any intention that this should impose a restriction. Unless otherwise specified, the percentages are weight percent.

### Examples and Comparative Example

### General method for preparing the polymers

600 g of monomer composition according to the composition detailed in each case in Table 1 and *n*-dodecyl mercaptan (20 g to 2 g depending on the desired molecular weight) are mixed. 44.4 g of this monomer/regulator mixture are charged together with 400 g of carrier oil (e.g. 100N mineral oil, synthetic dinonyl adipate or vegetable oil) into the 2 1 reaction flask of an apparatus with sabre stirrer, condenser, thermometer, feed pump and N₂ feed line. The apparatus is inertized and heated to 100°C with the aid of an oil bath. The remaining amount of 555.6 g of monomer/ regulator mixture is admixed with 1.4 g of tert-butyl peroctoate. Once the mixture in the reaction flask has attained a temperature of 100°C, 0.25 g of tert-butyl peroctoate is added, and the feed of the monomer/regulator/initiator mixture by means of a pump is started simultaneously. The addition is effected uniformly over a period of 210 min at 100°C. 2 h after the end of feeding, another 1.2 g of tert-butyl peroctoate are added and the mixture is stirred at 100°C for a further 2 h. A 60% clear concentrate is obtained.

The mass-average molecular weight M_{w} and the polydispersity index PDI of the polymers were determined by GPC. The measurements were effected in tetrahydrofuran at 35°C against a polymethyl methacrylate calibration curve composed of a set of ≥ 25 standards (Polymer Standards Service or Polymer Laboratories), whose Mₚₑₐₖ was distributed in a logarithmically uniform manner over the range of 5 x 10⁶ to 2 x 10² g/mol. A combination of six columns (Polymer Standards Service SDV 100Å/2x SDV LXL/2x SDV 100Å/Shodex KF-800D) was used. To record the signal, an RI detector (Agilent 1100 Series) was used.

**Table 1: Properties of the polymers used**

| Polymer | Monomer composition (weight ratio) | Mw [g/mol] | PDI (Mw/Mn) |
|---|---|---|---|
| PAMA 1 | SMA-LMA- DPMA | 40 000 | 2.0 |
| | 60.4-39.4-0.2 | | |
| PAMA 2 | DPMA-LIMA-MMA-SMA-HEMA | 22 000 | 2.0 |
| | 88.45-0.55-1.0-1.0-9.0 | | |

| | | | |
|---|---|---|---|
| SMA: alkyl methacrylate which has 16 to 18 carbon atoms in the alkyl part LMA: alkyl methacrylate which has about 10 carbon atoms in the alkyl part, the alkyl part being predominantly linear LIMA alkyl methacrylate which has 12 to 15 carbon atoms in the alkyl part (prepared from Sasol's ®LIAL 125) DPMA: alkyl methacrylate which has 12 to 15 carbon atoms in the alkyl part (prepared from Shell's ®Neodol 25 E) MMA methyl methacrylate HEMA: 2-hydroxyethyl methacrylate | | | |

Subsequently, the polymers thus obtained were studied in a biodiesel composition derived from canola oil. The biodiesel comprised about 63.1 % octadecenoic acid methyl ester (especially oleic acid methyl ester); about 18.0 % octadecadienoic acid methyl ester (especially linoleic acid methyl ester); about 8.3 % octadecatrienoic acid methyl ester (especially linolenic acid methyl ester); about 4.1 % hexadecanoic acid methyl ester (especially palmitic acid methyl ester); about 2.1 % octadecanoic acid methyl ester (especially stearic acid methyl ester); about 1.4 % eicosanoic acid methyl ester (especially arachidic acid methyl ester); and the residue was formed by other saturated and unsaturated fatty acid methyl esters in amounts below 1 %. The analysis was made by gas chromatography (GC) and the % is based on the peak area of the chromatogram.

To study the filterability of the compositions, the Cold Soak Filter Test (CSFT) value of the fuel compositions according to ASTM D 7501 was determined.

**Table 3: CSFT value of fuel the compositions**

| Additive (polymer according to) | Amount [% by weight] | Filter time [s] | Filtered volume [ml] |
|---|---|---|---|
| No | No | 720 | 250 |
| PAMA 1 | 0.1 | 508 | 300 |
| PAMA 1 | 0.25 | 324 | 300 |
| PAMA 1 and PAMA 2 (50 to 50 mixture by weight) | 0.25 | 113 | 300 |
| PAMA 1 and PAMA 2 (50 to 50 mixture by weight) | 0.5 | 141 | 300 |

The Examples clearly show that the filterability of a biodiesel can be improved astonishingly. While the additive consisting of alkylmethacrylates according to Example 1 can improve the CSFT value significantly, a mixture of polymers PAMA 1 and PAMA 2 as mentioned above show a surprising synergistic effect.

## Claims

1. A fuel oil composition comprising a biodiesel oil **characterized in that** the fuel composition comprises at least one additive for improving the filterability, wherein said additive for improving the filterability comprises at least two polyalkyl(meth)acrylate polymers, wherein one of the polyalkyl(meth)acrylate polymers comprises repeating units being derived from alkyl (meth)acrylates having 16 to 40 carbon atoms in the alkyl residue and one of the polyalkyl(meth)acrylate polymers comprises repeating units which are derived from hydroxyl-containing monomers and/or (meth)acrylates of ether alcohols.

2. The fuel oil composition according to claim 1, wherein the weight ratio of said polyalkyl(meth)acrylate polymers comprising repeating units being derived from alkyl (meth)acrylates having 16 to 40 carbon atoms in the alkyl residue to said other polyalkyl(meth)acrylate polymer is in the range from 10:1 to 1:10.

3. The fuel oil composition according to claim 1, wherein said composition comprises at least 70 % by weight fuel oil.

4. The fuel oil composition according to claim 1, wherein said fuel oil comprises a mineral oil.

5. The fuel oil composition according to claim 1, wherein said biodiesel comprises fatty acid esters which are derived from monohydric alcohols having 1 to 4 carbon atoms.

6. The composition according to claim 5, wherein said biodiesel comprises at least 10 % by weight of fatty acid esters which are derived from methanol and/or ethanol and saturated fatty acids.

7. The fuel oil composition according to claim 1, wherein said biodiesel comprises at least 5 ppm steryl glycosides.

8. The fuel oil composition according to claim 7, wherein said biodiesel comprises at least 20 ppm steryl glycosides.

9. The fuel oil composition according to claim 1, wherein said biodiesel achieves a CSFT value of 300 ml after 500 seconds without any additive for improving the filterability.

10. The fuel oil composition according to claim 9, wherein said biodiesel achieves a CSFT value of at most 250 ml after 720 seconds without any additive for improving the filterability.

11. The fuel oil composition according to claim 1, wherein said biodiesel achieves a CSFT value of 300 ml after at most 350 seconds with an effective amount of said additive for improving the filterability.

12. The fuel oil composition according to claim 1, wherein said biodiesel achieves a CSFT value of 300 ml after a period of time of at most 300 seconds with an effective amount of said additive for improving the filterability.

13. The fuel oil composition according to claim 1, wherein said biodiesel comprises 0.05 to 5 % by weight additive for improving the filterability.

14. A method for improving the filterability of a fuel oil comprising a biodiesel, wherein an additive for improving the filterability is added to said fuel oil composition, which additive comprises at least two polyalkyl(meth)acrylate polymers, wherein one of the polyalkyl(meth)acrylate polymers comprises repeating units being derived from alkyl (meth)acrylates having 16 to 40 carbon atoms in the alkyl residue and one of the polyalkyl(meth)acrylate polymers comprises repeating units which are derived from hydroxyl-containing monomers and/or (meth)acrylates of ether alcohols.

15. The method according to claim 13, wherein a polyalkyl(meth)acrylate polymer having a number average molecular weight Mn of from 750 to 100000 g/mol and a polydispersity Mw/Mn of from 1 to 8 is added as an additive for improving the filterability to the fuel oil compositions.

16. A use of an additive, comprising at least two polyalkyl(meth)acrylate polymers, wherein one of the polyalkyl(meth)acrylate polymers comprises repeating units being derived from alkyl (meth)acrylates having 16 to 40 carbon atoms in the alkyl residue and one of the polyalkyl(meth)acrylate polymers comprises repeating units which are derived from hydroxyl-containing monomers and/or (meth)acrylates of ether alcohols to improve the filterability of a fuel oil comprising a biodiesel.

17. The fuel oil composition according to claim 1, wherein one of the polyalkyl(meth)acrylate polymers comprises 5 to 80% by weight of repeating units being derived from alkyl (meth)acrylates having 16 to 40 carbon atoms in the alkyl residue.

18. The fuel oil composition according to claim 1, wherein the polyalkyl(meth)acrylate polymer comprising repeating units which are derived from hydroxyl-containing monomers and/or (meth)acrylates of ether alcohols further includes repeating units derived from ester monomers having 7 to 40 carbon atoms in the alcohol part.

## Patentansprüche

1. Brennstoffölzusammensetzung, umfassend ein Biodieselöl, **dadurch gekennzeichnet, dass** die Brennstoffzusammensetzung mindestens ein Additiv zur Verbesserung der Filtrierbarkeit umfasst, wobei das Additiv zur Verbesserung der Filtrierbarkeit mindestens zwei Polyalkyl(meth)acrylat-Polymere umfasst, wobei eines der Polyalkyl(meth)acrylatPolymere Wiederholungseinheiten, die sich von Alkyl(meth)acrylaten mit 16 bis 40 Kohlenstoffatomen im Alkylrest ableiten, umfasst und eines der Polyalkyl(meth)acrylat-Polymere Wiederholungseinheiten, die sich von hydroxylgruppenhaltigen Monomeren und/oder (Meth)acrylaten von Etheralkoholen ableiten, umfasst.

2. Brennstoffölzusammensetzung nach Anspruch 1, wobei das Gewichtsverhältnis der Polyalkyl(meth)acrylatPolymere, die Wiederholungseinheiten, die sich von Alkyl(meth)acrylaten mit 16 bis 40 Kohlenstoffatomen im Alkylrest ableiten, umfassen, zu dem anderen Polyalkyl(meth)acrylat-Polymer im Bereich von 10:1 bis 1:10 liegt.

3. Brennstoffölzusammensetzung nach Anspruch 1, wobei die Zusammensetzung mindestens 70 Gew.-% Brennstofföl umfasst.

4. Brennstoffölzusammensetzung nach Anspruch 1, wobei das Brennstofföl ein Mineralöl umfasst.

5. Brennstoffölzusammensetzung nach Anspruch 1, wobei der Biodiesel Fettsäureester, die sich von einwertigen Alkoholen mit 1 bis 4 Kohlenstoffatomen ableiten, umfasst.

6. Zusammensetzung nach Anspruch 5, wobei der Biodiesel mindestens 10 Gew.-% Fettsäureester, die sich von Methanol und/oder Ethanol und gesättigten Fettsäuren ableiten, umfasst.

7. Brennstoffölzusammensetzung nach Anspruch 1, wobei der Biodiesel mindestens 5 ppm Sterylglykoside umfasst.

8. Brennstoffölzusammensetzung nach Anspruch 7, wobei der Biodiesel mindestens 20 ppm Sterylglykoside umfasst.

9. Brennstoffölzusammensetzung nach Anspruch 1, wobei der Biodiesel nach 500 Sekunden ohne Additiv zur Verbesserung der Filtrierbarkeit einen CSFT-Wert von 300 ml erreicht.

10. Brennstoffölzusammensetzung nach Anspruch 9, wobei der Biodiesel nach 720 Sekunden ohne Additiv zur Verbesserung der Filtrierbarkeit einen CSFT-Wert von höchstens 250 ml erreicht.

11. Brennstoffölzusammensetzung nach Anspruch 1, wobei der Biodiesel nach höchstens 350 Sekunden mit einer wirksamen Menge des Additivs zur Verbesserung der Filtrierbarkeit einen CSFT-Wert von 300 ml erreicht.

12. Brennstoffölzusammensetzung nach Anspruch 1, wobei der Biodiesel nach höchstens 300 Sekunden mit einer wirksamen Menge des Additivs zur Verbesserung der Filtrierbarkeit einen CSFT-Wert von 300 ml erreicht.

13. Brennstoffölzusammensetzung nach Anspruch 1, wobei der Biodiesel 0,05 bis 5 Gew.-% Additiv zur Verbesserung der Filtrierbarkeit umfasst.

14. Verfahren zur Verbesserung der Filtrierbarkeit eines einen Biodiesel umfassenden Brennstofföls, wobei ein Additiv zur Verbesserung der Filtrierbarkeit zu der Brennstoffölzusammensetzung gegeben wird, wobei das Additiv mindestens zwei Polyalkyl(meth)acrylat-Polymere umfasst, wobei eines der Polyalkyl(meth)acrylat-Polymere Wiederholungseinheiten, die sich von Alkyl(meth)-acrylaten mit 16 bis 40 Kohlenstoffatomen im Alkylrest ableiten, umfasst und eines der Polyalkyl(meth)acrylat-Polymere Wiederholungseinheiten, die sich von hydroxylgruppenhaltigen Monomeren und/oder (Meth)acrylaten von Etheralkoholen ableiten, umfasst.

15. Verfahren nach Anspruch 13, bei dem ein Polyalkyl-(meth)acrylat-Polymer mit einem zahlenmittleren Molekulargewicht Mn von 750 bis 100.000 g/mol und einer Polydispersität Mw/Mn von 1 bis 8 als Additiv zur Verbesserung der Filtrierbarkeit zu den Brennstoffölzusammensetzungen gegeben wird.

16. Verwendung eines Additivs, das mindestens zwei Polyalkyl(meth)acrylat-Polymere umfasst, wobei eines der Polyalkyl(meth)acrylat-Polymere Wiederholungseinheiten, die sich von Alkyl(meth)-acrylaten mit 16 bis 40 Kohlenstoffatomen im Alkylrest ableiten, umfasst und eines der Polyalkyl(meth)acrylat-Polymere Wiederholungseinheiten, die sich von hydroxylgruppenhaltigen Monomeren und/oder (Meth)acrylaten von Etheralkoholen ableiten, umfasst, zur Verbesserung der Filtrierbarkeit eines einen Biodiesel umfassenden Brennstofföls.

17. Brennstoffölzusammensetzung nach Anspruch 1, wobei eines der Polyalkyl(meth)acrylat-Polymere 5 bis 80 Gew.-% Wiederholungseinheiten, die sich von Alkyl-(meth)acrylaten mit 16 bis 40 Kohlenstoffatomen im Alkylrest ableiten, umfasst.

18. Brennstoffölzusammensetzung nach Anspruch 1, wobei das Polyalkyl(meth)acrylat-Polymer, das Wiederholungseinheiten, die sich von hydroxylgruppenhaltigen Monomeren und/oder (Meth)acrylaten von Etheralkoholen ableiten, umfasst, ferner Wiederholungseinheiten, die sich von Estermonomeren mit 7 bis 40 Kohlenstoffatomen im Alkoholteil ableiten, enthält.

## Revendications

1. Composition de fioul comprenant un biodiesel, **caractérisée en ce que** la composition de fioul comprend au moins un additif destiné à améliorer la filtrabilité, ledit additif destiné à améliorer la filtrabilité comprenant au moins deux polymères de poly(méth)acrylate d'alkyle, un des polymères de poly(méth)acrylate d'alkyle comprenant des motifs répétitifs dérivés de (méth)acrylates d'alkyle ayant 16 à 40 atomes de carbone dans le résidu alkyle et un des polymères de poly (méth) acrylate d'alkyle comprenant des motifs répétitifs qui sont dérivés de monomères contenant des groupes hydroxyle et/ou de (méth)acrylates d'éthers-alcools.

2. Composition de fioul selon la revendication 1, dans laquelle le rapport pondéral entre lesdits polymères de poly (méth) acrylate d'alkyle comprenant des motifs répétitifs dérivés de (méth)acrylates d'alkyle ayant 16 à 40 atomes de carbone dans le résidu alkyle et ledit autre polymère de poly(méth)acrylate d'alkyle se situe dans la gamme de 10:1 à 1:10.

3. Composition de fioul selon la revendication 1, ladite composition comprenant au moins 70 % en poids de fioul.

4. Composition de fioul selon la revendication 1, dans laquelle ledit fioul comprend une huile minérale.

5. Composition de fioul selon la revendication 1, dans laquelle ledit biodiesel comprend des esters d'acides gras qui sont dérivés de monoalcools ayant 1 à 4 atomes de carbone.

6. Composition selon la revendication 5, dans laquelle ledit biodiesel comprend au moins 10 % en poids d'esters d'acides gras qui sont dérivés du méthanol et/ou de l'éthanol et d'acides gras saturés.

7. Composition de fioul selon la revendication 1, dans laquelle ledit biodiesel comprend au moins 5 ppm de glycosides stéryliques.

8. Composition de fioul selon la revendication 7, dans laquelle ledit biodiesel comprend au moins 20 ppm de glycosides stéryliques.

9. Composition de fioul selon la revendication 1, dans laquelle ledit biodiesel atteint une valeur CSFT de 300 ml après 500 secondes sans aucun additif destiné à améliorer la filtrabilité.

10. Composition de fioul selon la revendication 9, dans laquelle ledit biodiesel atteint une valeur CSFT de 250 ml maximum après 720 secondes sans aucun additif destiné à améliorer la filtrabilité.

11. Composition de fioul selon la revendication 1, dans laquelle ledit biodiesel atteint une valeur CSFT de 300 ml après 350 secondes maximum avec une quantité efficace dudit additif destiné à améliorer la filtrabilité.

12. Composition de fioul selon la revendication 1, dans laquelle ledit biodiesel atteint une valeur CSFT de 300 ml après un laps de temps de 300 secondes maximum avec une quantité efficace dudit additif destiné à améliorer la filtrabilité.

13. Composition de fioul selon la revendication 1, dans laquelle ledit biodiesel comprend 0,05 à 5 % en poids d'additif destiné à améliorer la filtrabilité.

14. Procédé d'amélioration de la filtrabilité d'un fioul comprenant un biodiesel, dans lequel un additif destiné à améliorer la filtrabilité est ajouté à ladite composition de fioul, lequel additif comprend au moins deux polymères de poly(méth)acrylate d'alkyle, un des polymères de poly(méth)acrylate d'alkyle comprenant des motifs répétitifs dérivés de (méth)acrylates d'alkyle ayant 16 à 40 atomes de carbone dans le résidu alkyle et un des polymères de poly(méth)acrylate d'alkyle comprenant des motifs répétitifs qui sont dérivés de monomères contenant des groupes hydroxyle et/ou de (méth)acrylates d'éthers-alcools.

15. Procédé selon la revendication 13, dans lequel un polymère de poly(méth)acrylate d'alkyle ayant un poids moléculaire moyen en nombre Mn de 750 à 100 000 g/mol et une polydispersité Mw/Mn de 1 à 8 est ajouté comme additif destiné à améliorer la filtrabilité aux compositions de fioul.

16. Utilisation d'un additif comprenant au moins deux polymères de poly(méth)acrylate d'alkyle, un des polymères de poly(méth)acrylate d'alkyle comprenant des motifs répétitifs dérivés de (méth)acrylates d'alkyle ayant 16 à 40 atomes de carbone dans le résidu alkyle et un des polymères de poly(méth)acrylate d'alkyle comprenant des motifs répétitifs qui sont dérivés de monomères contenant des groupes hydroxyle et/ou de (méth)acrylates d'éthers-alcools pour améliorer la filtrabilité d'un fioul comprenant un biodiesel.

17. Composition de fioul selon la revendication 1, dans laquelle un des polymères de poly(méth)acrylate d'alkyle comprend 5 à 80 % en poids de motifs répétitifs dérivés de (méth)acrylates d'alkyle ayant 16 à 40 atomes de carbone dans le résidu alkyle.

18. Composition de fioul selon la revendication 1, dans laquelle le polymère de poly(méth)acrylate d'alkyle comprenant des motifs répétitifs qui sont dérivés de monomères contenant des groupes hydroxyle et/ou de (méth)acrylates d'éthers-alcools comporte également des motifs répétitifs dérivés de monomères d'ester ayant 7 à 40 atomes de carbone dans la partie alcoolique.
